# EUROPEAN PATENT APPLICATION

(11) **EP 4 741 344 A1**
(43) Date of publication of application: **13.05.2026**
(21) Application number: 24212293.5
(22) Date of filing: 12.11.2024
(51) Int. Cl.: C01C 1/00, F23C 99/00

(54) **PROCESS FOR PRODUCING A GASEOUS AMMONIA FUEL FOR A FIRED EQUIPMENT**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Lutz, Michael, 60439 Frankfurt am Main (DE); Sikorski, Robert, 31-545 Krakow (PL); Borgosz, Malgorzata, 31-545 Krakow (PL); Vicari, Lorenzo, 60439 Frankfurt am Main (DE); Olszynska, Sara, 31-545 Krakow (PL); Ulber, Dieter, 60439 Frankfurt am Main (DE)
(74) Representative: Air Liquide

(57) **Abstract**

The invention relates to a process for producing, from a liquid feed stream (2) comprising ammonia, a gaseous ammonia fuel (3) for a fired equipment (4), said process comprising the following steps:
- providing said liquid feed stream (2) to a fuel vaporizer (5) to produce said gaseous ammonia fuel (3), said gaseous ammonia fuel (3) being at a nominal pressure p0 in the fuel vaporizer (5);
- directing the gaseous ammonia fuel (3) to the fired equipment (4) for performing a combustion of the gaseous ammonia fuel (3); and
- when a variation in a demand in said gaseous ammonia fuel (3) occurs, maintaining the pressure of the gaseous ammonia fuel (3) in the fuel vaporizer (5) at the nominal pressure p0.

## Description

The present invention relates to a process for producing, from a liquid feed stream comprising ammonia, a gaseous ammonia fuel for a fired equipment.

In an endothermic process for producing hydrogen (for example ammonia cracking) where ammonia is used as a fuel, for example such as a trim fuel, liquid ammonia feed needs to be vaporized. In a process of ammonia cracking reaction, a main ammonia vaporizer is provided in the process line of an ammonia cracker. The main vaporizer vaporizes ammonia at a process pressure ranging from 20 to 60 bar. However, the ammonia fuel is required at a lower pressure (1 to 5 bar). Therefore, a fuel vaporizer that operates at a lower pressure is beneficial. Controlling this fuel vaporizer is challenging because the vaporized ammonia fuel must be able to respond quickly to changes in load. Unlike trim fuels that are already in a gaseous state, such as natural gas, ammonia must first be vaporized, which can introduce a lag time and delay the availability of gaseous ammonia fuel. Furthermore, a rapid increase in the fuel demand, and the subsequent opening of the flow control for vaporized ammonia fuel, would cause a quick depressurization of the fuel vaporizer.

The present invention aims to overcome these drawbacks.

For this purpose, the invention proposes a process for producing, from a liquid feed stream comprising ammonia, a gaseous ammonia fuel for a fired equipment, said process comprising the following steps:
- providing said liquid feed stream to a fuel vaporizer to produce said gaseous ammonia fuel, said gaseous ammonia fuel being at a nominal pressure p0 in the fuel vaporizer;
- directing the gaseous ammonia fuel to the fired equipment for performing a combustion of the gaseous ammonia fuel; and
- when a variation in a demand in said gaseous ammonia fuel occurs, maintaining the pressure of the gaseous ammonia fuel in the fuel vaporizer at the nominal pressure p0.

The variation in the demand for said gaseous ammonia fuel may appear in the following situations:
- an increase in the heating load of the fired equipment, particularly correlated with a desired increase in hydrogen production of a related hydrogen production process using the fired equipment and therefore an increase in a gas conversion feed stream flow rate (that is a process gas as different from the liquid feed stream to the fuel vaporizer) to a gas conversion unit,
- a decrease in the heating load of the fired equipment, particularly correlated with a desired decrease in hydrogen production of a related hydrogen production process using the fired equipment and therefore a decrease in a gas conversion feed stream flow rate (that is a process gas as different from the liquid feed stream to the fuel vaporizer) to a gas conversion unit,
- a decrease (or even loss) in the availability of another fuel (such as the PSA (Pressure Swing Adsorption) off gas associated with a hydrogen recovery) for the total firing duty, thus requiring compensation with more gaseous ammonia fuel, particularly more gaseous ammonia trim fuel.

The gaseous ammonia fuel may be a trim fuel for the fired equipment.

When an increase in a demand in said gaseous ammonia fuel occurs leading to a pressure decrease in the fuel vaporizer, the process may comprise the step of recovering the nominal pressure p0 of the gaseous ammonia fuel in the fuel vaporizer at the nominal pressure p0 by re-increasing the pressure in the vaporizer. Said step of recovering the nominal pressure p0 is an example of the step of maintaining the pressure p0 of the gaseous ammonia fuel in the fuel vaporizer at the nominal pressure p0.

In one embodiment, the liquid feed stream provides liquid ammonia to the fuel vaporizer.

In one embodiment, maintaining the pressure of the gaseous ammonia fuel in the fuel vaporizer at the nominal pressure p0 comprises the step of adjusting the heat provided to the fuel vaporizer, in particular to the liquid ammonia in the fuel vaporizer.

In one embodiment, adjusting the heat provided to the fuel vaporizer is made by controlling the flow rate of a heating medium to a heat exchanger in the fuel vaporizer.

For instance, by increasing the flow rate of the heating medium to the heat exchanger in the fuel vaporizer, the heat provided to the fuel vaporizer, in particular to the liquid ammonia in the fuel vaporizer, is increased and the pressure of the gaseous ammonia fuel in the fuel vaporizer is increased, for instance:
- to recover the nominal pressure p0, or
- the pressure of the gaseous ammonia fuel in the fuel vaporizer is increased temporarily before going back to the nominal pressure p0.

In an embodiment, controlling the heating medium flow rate is made by adjusting said flow rate downstream of the heat exchanger.

In an embodiment, controlling the heating medium flow rate is made by adjusting said flow rate upstream of the heat exchanger.

In one embodiment, adjusting a heat provided to the fuel vaporizer is made by controlling a temperature of a heating medium (or of said heating medium) to a heat exchanger (or to said heat exchanger) in the fuel vaporizer.

For instance, by increasing the temperature of the heating medium to the heat exchanger in the fuel vaporizer, the heat provided to the fuel vaporizer, in particular to the liquid ammonia in the fuel vaporizer, is increased and the pressure of the gaseous ammonia fuel in the fuel vaporizer is increased, for instance:
- to recover the nominal pressure p0, or
- the pressure of the gaseous ammonia fuel in the fuel vaporizer is increased temporarily before going back to the nominal pressure p0.

In one embodiment, when the pressure of the gaseous ammonia fuel in the fuel vaporizer deviates from the nominal pressure p0 (for instance when the pressure of the gaseous ammonia fuel in the fuel vaporizer is increased temporarily), the return to the nominal pressure p0 may occur with pressure fluctuations.

In one embodiment, the fuel vaporizer comprises a heat exchanger (or said heat exchanger). The heat exchanger is advantageously arranged to transfer heat from the heating medium to the liquid ammonia in the fuel vaporizer.

The process may also work without control element on the heat exchanger. For example, a heating medium could simply circulate through the heat exchanger. If the maximum temperature of the heating medium and the nominal pressure p0 of the fuel vaporizer are aligned, then the pressure in the fuel vaporizer cannot rise above related vapor pressure at said temperature.

In an embodiment, the process comprises the step of controlling the level of liquid ammonia in the fuel vaporizer.

In an embodiment, maintaining the pressure of the gaseous ammonia fuel in the fuel vaporizer at the nominal pressure p0 is made by controlling the level of liquid ammonia in the fuel vaporizer so as to adjust a portion of the heat exchanger immersed in the liquid ammonia in the fuel vaporizer, for instance so as to maintain a first portion of the heat exchanger immersed in the liquid ammonia level and a second portion of the heat exchanger above the liquid ammonia level.

Preferably, the heat exchanger comprises a heat exchange coil configured for receiving said heating medium.

In one embodiment, controlling the level of liquid ammonia in the fuel vaporizer results in an adjusted immersed portion of the heat exchange coil (which is for instance only partially immersed in the liquid ammonia or fully immersed in the liquid ammonia).

It is thus possible to reduce the vaporization of liquid ammonia in the fuel vaporizer (since there is less ammonia liquid in contact with the heat exchanger) so as to lower the pressure in the fuel vaporizer.

In an embodiment, controlling the level of liquid ammonia in the fuel vaporizer comprises the steps of:
- measuring the level of liquid ammonia in the fuel vaporizer,
- adjusting the liquid feed stream flow rate to the fuel vaporizer so that the level of liquid ammonia in the fuel vaporizer reaches a requested level.

For example, the adjustment of the immersed portion of the heat exchanger in the liquid ammonia can be controlled at constant flow rate of the heating medium into the heat exchanger.

In an embodiment, the process comprises the steps of:
- comparing the level (that can be measured or estimated) of liquid ammonia in the fuel vaporizer with a predetermined minimum level,
- in case the level is lower than the predetermined minimum level, adjusting the liquid feed stream to the fuel vaporizer so as to maintain the level above the predetermined minimum level.

It is thus possible to maintain a minimum level of liquid ammonia in the fuel vaporizer to compensate for the evaporation of the liquid ammonia, particularly to maintain a heat exchange between the heating medium in the heat exchanger and the liquid ammonia in the fuel vaporizer.

In an embodiment, the process comprises the steps of:
- comparing the level (that can be measured or estimated) of liquid ammonia in the fuel vaporizer with a predetermined maximum level,
- in case the level is higher than the predetermined maximum level, adjusting the liquid feed stream to the fuel vaporizer so as to maintain the level under the predetermined maximum level.

It is thus possible to avoid overfilling the fuel vaporizer with liquid ammonia.

In one embodiment, the process comprises the steps of:
- vaporizing, in a main vaporizer, an ammonia feedstock stream for an ammonia cracking reaction,
- directing, via a main vaporizer blowdown, liquid ammonia from said main vaporizer to the fuel vaporizer so that said liquid ammonia from the main vaporizer is the liquid feed stream for the fuel vaporizer.

In one embodiment, the process comprises the step of:
- providing an additional liquid ammonia stream, in addition to the liquid feed stream from the main vaporizer to the fuel vaporizer.

For example, the process may comprise the step of increasing the flow rate of the additional liquid ammonia stream to the fuel vaporizer to maintain a sufficient level of the liquid ammonia in the fuel vaporizer.

The term "fired equipment" denotes that the combustion is made with the formation of a flame. This may be used to provide heat to an endothermic process or to a process for (electrical) power generation. Depending on the conditions, the flame may or may not be visible, so-called "flameless" operation.

For example, the process comprises performing said combustion with the fired equipment to provide heat to a gas conversion. Preferably, said gas conversion is an endothermic gas conversion. The fired equipment is for example a furnace.

For example, the gas conversion is for producing a hydrogen product.

In one embodiment, the gas conversion comprises a reforming reaction of a hydrocarbon and produces a synthesis gas stream as said hydrogen product.

In one embodiment, the gas conversion comprises an ammonia cracking reaction, in particular said ammonia cracking reaction, and produces a cracked gas stream as said hydrogen product.

In one embodiment, the fired equipment is arranged as a glass furnace with ammonia burners.

In one embodiment, the process comprises the steps of:
- detecting said variation in the demand for the gaseous ammonia fuel that occurs, by measuring a variation of a flow rate of the gaseous ammonia fuel to the fired equipment or detecting a variation of a flow rate of a feed to said gas conversion,
- maintaining the pressure of the gaseous ammonia fuel in the fuel vaporizer at the nominal pressure p0 by performing a compensation action.

With this process called hereafter "feed-forward control process", a decrease in said pressure of the vaporization chamber can be prevented since said pressure decrease is anticipated by increasing the heat provided to the fuel vaporizer.

In one embodiment, the process comprises recovering hydrogen from said hydrogen product, thereby producing a purified hydrogen product and an off gas, said off gas being used as fuel for the fired equipment.

In one embodiment, the process comprises directing said off gas to the fired equipment for performing a combustion.

In one embodiment, the gaseous ammonia fuel is directed to the fired equipment as a trim fuel.

The invention also relates to an installation for producing, from a liquid feed stream comprising ammonia, a gaseous ammonia fuel for a fired equipment, said installation comprising:
- a fired equipment;
- a fuel vaporizer connected to said fired equipment and configured to receive said liquid feed stream;
- a control unit configured to implement the process as described above.

The fuel vaporizer may comprise a heat exchanger arranged to receive a heating medium. The heat exchanger is advantageously arranged to transfer heat from the heating medium to the liquid ammonia in the fuel vaporizer.

In one embodiment, said installation comprises at least one of:
- a heating medium flow rate control valve arranged upstream the heat exchanger,
- a heating medium flow rate control valve arranged downstream the heat exchanger,
- both heating medium flow rate control valves arranged upstream and downstream the heat exchanger in the fuel vaporizer.

The following embodiments are examples. Although the description refers to one or more embodiments, this does not necessarily mean that each reference relates to the same embodiment, or that the features only apply to a single embodiment. Individual features of various embodiments can also be combined or interchanged in order to create other embodiments.

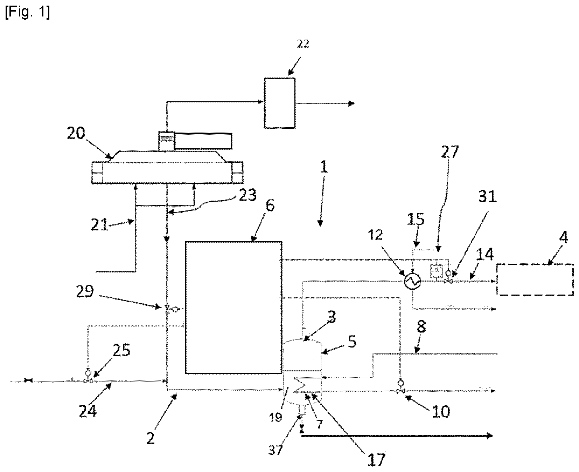

Figure 1 is a schematic representation of the installation for producing hydrogen, in accordance with one embodiment of the present invention.

Figure 1 shows an installation 1 according to an embodiment of the invention, for producing, from a liquid feed stream 2 comprising ammonia, a gaseous ammonia fuel 3 for a fired equipment 4.

Said installation 1 comprises the fired equipment 4 and a fuel vaporizer 5 connected to said fired equipment 4 and configured to receive said liquid feed stream 2;

Said installation 1 further comprises a control unit 6 configured to implement the process as described below.

The fuel vaporizer 5 comprises a heat exchanger 7 arranged to receive a heating medium 8. The heat exchanger is advantageously arranged to transfer heat from the heating medium 8 to the liquid ammonia 19 in the fuel vaporizer 5.

The heat exchanger 7 is advantageously arranged to transfer heat from the heating medium 8 to the liquid ammonia in the fuel vaporizer 5.

The heat exchanger 7 comprises a heat exchange coil 17 configured for receiving said heating medium 8.

The heating medium 8 may be steam or condensing gasses. It can be hot, non-condensating gases. It can be heat integrated with the overall process, for example a part of the cracked gas in an ammonia cracker, or a part of the hot flue gas. It can also be hot liquids. It can also be an electric heater.

The installation 1 comprises at least one of a heating medium flow rate control valve 10 arranged downstream the heat exchange 7.

In one variant, the heating medium flow rate control valve 10 may be arranged upstream the heat exchanger 7.

In another variant, the installation 1 may comprise two heating medium flow rate control valves arranged upstream and downstream the heat exchanger in the fuel vaporizer 5.

The installation 1 comprises a superheater 12 downstream of the fuel vaporizer 5 so as to superheat the vaporized purified ammonia stream 3. Thus, a superheated vaporized purified ammonia stream 14 is provided.

The superheater 12 is heated by a heating medium 15.

The control unit 6 is configured to implement the process for producing, from the liquid feed stream 2 comprising ammonia, the gaseous ammonia fuel 3 for the fired equipment 4, said process comprising the following steps:
- providing said liquid feed stream 2 to a fuel vaporizer 5 to produce said gaseous ammonia fuel 3, said gaseous ammonia fuel 3 being at a nominal pressure p0 in the fuel vaporizer 5;
- directing the gaseous ammonia fuel 3 to the fired equipment 4 for performing a combustion of the gaseous ammonia fuel 3; and
- when a variation in a demand in said gaseous ammonia fuel 3 occurs, maintaining the pressure of the gaseous ammonia fuel 3 in the fuel vaporizer 5 at the nominal pressure p0.

In one embodiment, the nominal pressure p0 ranges between 3 and 15 bar, preferably between 6 and 7 bar.

The variation in the demand for said gaseous ammonia fuel 3 may appear in the following situations:
- an increase in the heating load of the fired equipment 4, particularly correlated with a desired increase in hydrogen production of a related hydrogen production process using the fired equipment 4 and therefore an increase in a gas conversion feed stream flow rate (that is a process gas as different from the liquid ammonia feed to the fuel vaporizer 5) to a gas conversion unit,
- a decrease in the heating load of the fired equipment 4, particularly correlated with a desired decrease in hydrogen production of a related hydrogen production process using the fired equipment 4 and therefore a decrease in a gas conversion feed stream flow rate (that is a process gas as different from the liquid ammonia feed to the fuel vaporizer 5) to a gas conversion unit,
- a decrease (or even loss) in the availability of another fuel (such as the PSA (Pressure Swing Adsorption) off gas associated with a hydrogen recovery) for the total firing duty, thus requiring compensation with more gaseous ammonia fuel 3, particularly more gaseous ammonia trim fuel.

The gaseous ammonia fuel 3 is a trim fuel for the fired equipment 4.

The flow rate of gaseous ammonia fuel 3 for the fired equipment 4 may be controlled by a flow rate control valve 31.

When an increase in a demand in said gaseous ammonia fuel 3 occurs leading to a pressure decrease in the fuel vaporizer 5, the process may comprise the step of recovering the nominal pressure p0 of the gaseous ammonia fuel 3 in the fuel vaporizer 5 at the nominal pressure p0 by re-increasing the pressure in the vaporizer. Said step of recovering the nominal pressure p0 is an example of the step S3 of maintaining the pressure p0 of the gaseous ammonia fuel 3 in the fuel vaporizer 5 at the nominal pressure p0.

Maintaining the pressure of the gaseous ammonia fuel 3 in the fuel vaporizer 5 at the nominal pressure p0 comprises the step of adjusting the heat provided to the fuel vaporizer 5, in particular to the liquid ammonia in the fuel vaporizer 5.

Adjusting the heat provided to the fuel vaporizer 5 is made by controlling the flow rate of the heating medium to the heat exchanger 7 in the fuel vaporizer 5 with the help of the heating medium flow rate control valve 10.

For instance, by increasing the flow rate of the heating medium 8 to the heat exchanger 7 in the fuel vaporizer 5, the heat provided to the fuel vaporizer 5, in particular to the liquid ammonia in the fuel vaporizer 5, is increased and the pressure of the gaseous ammonia fuel 3 in the fuel vaporizer 5 is increased, for instance:
- to recover the nominal pressure p0, or
- the pressure of the gaseous ammonia fuel 3 in the fuel vaporizer 5 is increased temporarily before going back to the nominal pressure p0.

In the present embodiment, controlling the heating medium flow rate is made by adjusting said flow rate downstream of the heat exchanger 7.

In another embodiment, controlling the heating medium flow rate may be made by adjusting said flow rate upstream of the heat exchanger 7.

In one embodiment, adjusting the heat provided to the fuel vaporizer 5 is made by controlling a temperature of the heating medium 8 to the heat exchanger 7 in the fuel vaporizer 5.

For instance, by increasing the temperature of the heating medium 8 to the heat exchanger 7 in the fuel vaporizer 5, the heat provided to the fuel vaporizer 5, in particular to the liquid ammonia in the fuel vaporizer 5, is increased and the pressure of the gaseous ammonia fuel 3 in the fuel vaporizer 5 is increased, for instance:
- to recover the nominal pressure p0, or
- the pressure of the gaseous ammonia fuel 3 in the fuel vaporizer 5 is increased temporarily before going back to the nominal pressure p0.

When the pressure of the gaseous ammonia fuel 3 in the fuel vaporizer 5 deviates from the nominal pressure p0 (for instance when the pressure of the gaseous ammonia fuel 3 in the fuel vaporizer 5 is increased temporarily), the return to the nominal pressure p0 may occur with pressure fluctuations.

The process may also work without control element on the heat exchanger 7. For example, a heating medium 8 could simply circulate through the heat exchanger 7. If the maximum temperature of the heating medium 8 and the nominal pressure p0 of the fuel vaporizer are aligned, then the pressure in the fuel vaporizer cannot rise above related vapor pressure at said temperature.

In an embodiment, the heat exchanger 7 has an oversized surface area together with an automatic control just via the temperature difference between the heating medium 8 and the vapor pressure.

In an embodiment, maintaining the pressure of the gaseous ammonia fuel 3 in the fuel vaporizer 5 at the nominal pressure p0 is made by controlling the level of liquid ammonia so as to adjust a portion of the heat exchanger 7 immersed in the liquid ammonia in the fuel vaporizer 5, for instance so as to maintain a first portion of the heat exchanger 7 immersed in the liquid ammonia level and a second portion of the heat exchanger 7 above the liquid ammonia level.

In this case, controlling the level of liquid ammonia in the fuel vaporizer 5 results in an adjusted immersed portion of the heat exchange coil 17 (which is for instance only partially immersed in the liquid ammonia or fully immersed in the liquid ammonia).

It is thus possible to reduce the vaporization of liquid ammonia in the fuel vaporizer 5 (since there is less ammonia liquid in contact with the heat exchanger 7) so as to lower the pressure in the fuel vaporizer 5.

Controlling the level of liquid ammonia in the fuel vaporizer 5 comprises the steps of:
- measuring the level of liquid ammonia in the fuel vaporizer 5,
- adjusting the liquid feed stream flow rate to the fuel vaporizer 5 so that the level of liquid ammonia in the fuel vaporizer 5 reaches a requested level.

For example, the adjustment of the immersed portion of the heat exchanger 7 in the liquid ammonia can be controlled at constant flow rate of the heating medium 8 into the heat exchanger 7.

The process also comprises the steps of:
- comparing the level (that can be measured or estimated) of liquid ammonia in the fuel vaporizer 5 with a predetermined minimum level,
- in case the level is lower than the predetermined minimum level, adjusting the liquid feed stream 2 to the fuel vaporizer 5 so as to maintain the level above the predetermined minimum level.

It is thus possible to maintain a minimum level of liquid ammonia in the fuel vaporizer 5 to compensate for the evaporation of the liquid ammonia, particularly to maintain a heat exchange between the heating medium 8 in the heat exchanger 7 and the liquid ammonia in the fuel vaporizer 5.

The process comprises the steps of:
- comparing the level (that can be measured or estimated) of liquid ammonia in the fuel vaporizer 5 with a predetermined maximum level,
- in case the level is higher than the predetermined maximum level, adjusting the liquid feed stream 2 to the fuel vaporizer 5 so as to maintain the level under the predetermined maximum level.

It is thus possible to avoid overfilling the fuel vaporizer with liquid ammonia.

In the embodiment disclosed in Figure 1, the process further comprises the steps of:
- vaporizing, in a main vaporizer 20, an ammonia feedstock stream 21 for an ammonia cracking reaction in an ammonia cracker 22,
- directing, via a main vaporizer blowdown 23, liquid ammonia from said main vaporizer 20 to the fuel vaporizer 5 so that said liquid ammonia from the main vaporizer 20 is at least a portion of the liquid feed stream 2 for the fuel vaporizer 5.

The flow rate of liquid ammonia in the main vaporizer blowdown 23 may controlled by a flow rate control valve 29.

The process may comprise the step of:
- providing an additional liquid ammonia stream 24, in addition to the liquid feed stream 2 from the main vaporizer 20 to the fuel vaporizer 5.

For example, the process may comprise the step of increasing the flow rate of the additional liquid ammonia stream 24 to the fuel vaporizer 5 to maintain a sufficient level of the liquid ammonia in the fuel vaporizer 5 with the help of a flow rate control valve 25.

The term "fired equipment" denotes that the combustion is made with the formation of a flame. This may be used to provide heat to an endothermic process or to a process for (electrical) power generation. Depending on the conditions, the flame may or may not be visible, so-called "flameless" operation.

For example, the process comprises performing a combustion with the fired equipment 4 to provide heat to a gas conversion. Preferably, said gas conversion is an endothermic gas conversion. The fired equipment 4 is for example a furnace.

For example, the gas conversion is for producing a hydrogen product.

In one embodiment, the gas conversion comprises a reforming reaction of a hydrocarbon and produces a synthesis gas stream as said hydrogen product.

In one embodiment, the gas conversion comprises a cracking reaction of ammonia and produces a cracked gas stream as said hydrogen product.

In one embodiment, the fired equipment 4 is arranged as a glass furnace with ammonia burners.

The process further comprises the steps of:
- detecting said variation in the demand for the gaseous ammonia fuel 3 that occurs, by measuring a variation of a flow rate of the gaseous ammonia fuel 3 to the fired equipment 4 with the help of a flow rate measurement device 27,
- maintaining the pressure of the gaseous ammonia fuel 3 in the fuel vaporizer 5 at the nominal pressure p0 by performing a compensation action.

Performing a compensation action comprises:
- adjusting the heat provided to the fuel vaporizer 5, by controlling the flow rate of a heating medium 8 to a heat exchanger 7 in the fuel vaporizer 5 and/or controlling a temperature of the heating medium 8 to the heat exchanger 7 in the fuel vaporizer 5,
- and/or controlling a flow rate of said liquid feed stream 2 to the fuel vaporizer 5,
- the two above actions being in particular a function of the ammonia feed flow to the cracker or a function of an availability of other fuels such as off gasses recycled to the fired equipment.

With this process called hereafter "feed-forward control process", a decrease in said pressure of the vaporization chamber can be prevented since said pressure decrease is anticipated by increasing the heat provided to the fuel vaporizer 5.

The difference between the current total firing duty (for example measured) and the total heating demand is to be kept as close to zero as possible in operation.

The demand in said gaseous ammonia fuel 3 is a function of said difference.

The demand in said gaseous ammonia fuel 3 will change to provide a compensation: if said difference is increasing, then the demand in said gaseous ammonia fuel 3 increases; if said difference is decreasing, then the demand in said gaseous ammonia fuel 3 decreases.

In one embodiment, the process comprises recovering hydrogen from said hydrogen product, thereby producing a purified hydrogen product and an off gas, said off gas being used as fuel for the fired equipment 4.

In one embodiment, the process comprises directing said off gas to the fired equipment 4 for performing a combustion.

In one embodiment, the gaseous ammonia fuel 3 is directed to the fired equipment 4 as a trim fuel.

Thus we may have: off gas firing duty + other fuels firing duty + ammonia trim fuel firing duty = total firing duty.

The current total firing duty may vary in case of loss of said hydrogen recovery unit or the loss of other fuels which causes a decrease (or even loss) in the availability said off gas being used as fuel for the fired equipment 4, thus requiring compensation with more gaseous ammonia fuel 3, particularly more gaseous ammonia trim fuel.

The total heating demand may vary in case of an increase or decrease in the heating load of the fired equipment 4 as desired, particularly correlated with a desired increase in hydrogen production and therefore in a gas conversion feed stream.

In case both the current total firing duty and the total heating demand vary, said difference may vary quickly.

Increasing the heating medium flow rate will bring more heat to the fuel vaporizer 5 so as to generate more gaseous ammonia fuel 3 and thus may result in a pressure increase in the fuel vaporizer 5.

Decreasing the heating medium flow rate will bring less heat to the fuel vaporizer so as to generate less gaseous ammonia fuel 3 and thus may result in a pressure decrease in the fuel vaporizer.

Thus, enough gaseous ammonia fuel 3 can be produced from the fuel vaporizer 5.

The total firing duty is the sum of the firing duties from different gases, including the gaseous ammonia fuel 3 and all others fuel streams sent to the fired equipment 4, for example said off gas.

The control unit 6 is configured to control the various flow rate control valve disclosed above.

The fuel vaporizer 5 may comprise a blowdown outlet 37 configured to discharge a blowdown stream comprising traces of water and oil contaminants.

In summary, the process may include the steps of:
- controlling the gaseous ammonia fuel 3 flow rate which exits the fuel vaporizer 5, and/or
- controlling the liquid feed stream 2 to the fuel vaporizer 5, and/or
- controlling the level of liquid ammonia in the fuel vaporizer 5, and/or
- controlling the flow rate of the heating medium 8 in the heat exchanger 7 in the fuel vaporizer 5.

## Claims

1. A process for producing, from a liquid feed stream (2) comprising ammonia, a gaseous ammonia fuel (3) for a fired equipment (4), said process comprising the following steps:
- providing said liquid feed stream (2) to a fuel vaporizer (5) to produce said gaseous ammonia fuel (3), said gaseous ammonia fuel (3) being at a nominal pressure p0 in the fuel vaporizer (5);
- directing the gaseous ammonia fuel (3) to the fired equipment (4) for performing a combustion of the gaseous ammonia fuel (3); and
- when a variation in a demand in said gaseous ammonia fuel (3) occurs, maintaining the pressure of the gaseous ammonia fuel (3) in the fuel vaporizer (5) at the nominal pressure p0.

2. The process according to the preceding claim, wherein maintaining the pressure of the gaseous ammonia fuel (3) in the fuel vaporizer (5) at the nominal pressure p0 comprises the step of adjusting the heat provided to the liquid ammonia (19) in the fuel vaporizer (5).

3. The process according to any one of the preceding claims, wherein adjusting the heat provided to the fuel vaporizer (5) is made by controlling the flow rate of a heating medium (8) to a heat exchanger (7) in the fuel vaporizer (5).

4. The process according to any one of the preceding claims, wherein adjusting a heat provided to the fuel vaporizer (5) is made by controlling a temperature of a heating medium (8) to a heat exchanger (7) in the fuel vaporizer (5).

5. The process according to any one of the preceding claims, wherein the process comprises the step of controlling the level of liquid ammonia (19) in the fuel vaporizer (5).

6. The process according to the preceding claim, wherein the fuel vaporizer (5) comprises a heat exchanger (7), and maintaining the pressure of the gaseous ammonia fuel (3) in the fuel vaporizer (5) at the nominal pressure p0 is made by controlling the level of liquid ammonia in the fuel vaporizer (5) so as to adjust a portion of the heat exchanger (7) immersed in the liquid ammonia in the fuel vaporizer (5), so as to maintain a first portion of the heat exchanger (7) immersed in the liquid ammonia level and a second portion of the heat exchanger (7) above the liquid ammonia level.

7. The process according to any one of the claims 5 and 6, wherein controlling the level of liquid ammonia in the fuel vaporizer (5) comprises the steps of:
- measuring the level of liquid ammonia in the fuel vaporizer (5),
- adjusting the liquid feed stream (2) flow rate to the fuel vaporizer (5) so that the level of liquid ammonia in the fuel vaporizer (5) reaches a requested level.

8. The process according to any one of the preceding claims, wherein the process comprises the steps of:
- comparing the level of liquid ammonia in the fuel vaporizer (5) with a predetermined minimum level,
- in case the level is lower than the predetermined minimum level, adjusting the liquid feed stream (2) to the fuel vaporizer (5) so as to maintain the level above the predetermined minimum level.

9. The process according to any one of the preceding claims, wherein the process comprises the steps of:
- vaporizing, in a main vaporizer, an ammonia feedstock stream for an ammonia cracking reaction,
- directing, via a main vaporizer blowdown, liquid ammonia from said main vaporizer to the fuel vaporizer (5) so that said liquid ammonia from the main vaporizer is the liquid feed stream (2) for the fuel vaporizer (5).

10. The process according to the preceding claim, wherein the process comprises the step of:
- providing an additional liquid ammonia stream (24), in addition to the liquid feed stream (2) from the main vaporizer to the fuel vaporizer (5).

11. The process according to any one of the preceding claims, wherein the process comprises performing said combustion with the fired equipment (4) to provide heat to a gas conversion, for producing a hydrogen product.

12. The process according to the preceding claim, wherein the gas conversion comprises a reforming reaction of a hydrocarbon and produces a synthesis gas stream as said hydrogen product.

13. The process according to any one of the preceding claims, wherein the process comprises the steps of:
- detecting said variation in the demand for the gaseous ammonia fuel (3) that occurs, by measuring a variation of a flow rate of the gaseous ammonia fuel (3) to the fired equipment (4), or detecting a variation of a flow rate of a feed to said gas conversion,
- maintaining the pressure of the gaseous ammonia fuel (3) in the fuel vaporizer (5) at the nominal pressure p0 by performing a compensation action.

14. The process according to any one of the preceding claims, wherein the process comprises recovering hydrogen from said hydrogen product, thereby producing a purified hydrogen product and an off gas, said off gas being used as fuel for the fired equipment (4).
